# EUROPEAN PATENT SPECIFICATION

(11) **EP 4 002 364 B1**
(45) Date of publication and mention of the grant of the patent: **29.10.2025**
(21) Application number: 20207565.1
(22) Date of filing: 13.11.2020
(51) Int. Cl.: G10L 25/63, G06F 21/32, G10L 15/26

(54) **ASSESSING THE EMOTIONAL STATE OF A USER**
BEWERTUNG DES EMOTIONALEN ZUSTANDES EINES BENUTZERS
ÉVALUATION DE L'ÉTAT ÉMOTIONNEL D'UN UTILISATEUR

(43) Date of publication of application: 25.05.2022
(73) Proprietor: Framvik Produktion AB, 646 91 Gnesta (SE)
(72) Inventor: FORS, Axel, 646 91 Gnesta (SE); LARSSON, Tomas, 101 36 Stockholm (SE)
(74) Representative: Kransell & Wennborg KB

(56) References cited:
- WO-A1-2019/027939
- CN-A- 111 179 945
- US-A1- 2020 302 952
- US-B2- 9 031 293

## Description

### TECHNICAL FIELD OF THE INVENTION

The present invention relates to the database operations. The invention more particularly relates to a method, arrangement and computer program product for assessing the emotional state of a user.

### DESCRIPTION OF RELATED ART

The emotional state of people, such as stress, anger, calm and content, can be of interest in a variety of situations such as for determining if a person is to be granted access to an area or if an alarm is to be generated or not.

Emotional states are today typically subjectively determined by humans and the use of determined emotional states is typically also a manual activity. In for instance the examples given above a person that determines the mental state of another person would typically also manually grant access and/or generate the alarm.

US 2020/302952 discloses a wearable device with a microphone that acquires audio data of a wearer's speech. The audio data is processed to determine sentiment data indicative of perceived emotional content of the speech. A simplified user interface provides the wearer with information about the emotional content of their speech based on the sentiment data. The wearer may use this information to assess their state of mind, facilitate interactions with others, and so forth.

According to US 9031293 features, including one or more acoustic features, visual features, linguistic features, and physical features may be extracted from signals obtained by one or more sensors with a processor. The acoustic, visual, linguistic, and physical features may be analyzed with one or more machine learning algorithms and an emotional state of a user may be extracted from analysis of the features.

WO 2019/027939 discloses a mood adjuster device that comprises: a housing; a plurality of detectors or sensors for obtaining information on the physical characteristics of an individual; a plurality of sensory stimulus generators for providing sensory stimulus to the individual; a controller that receives information from the detectors or sensors and analyzes the information to determine a physical treatment; a memory for storing the information received by the plurality of detectors or sensors, the analyzes performed by the controller and the physical treatment as applied by the sensory stimulus generators; a user interface to allow the individual to communicate with the controller; a medical practitioner interface for accessing information stored in the memory or for providing instructions to the controller or to interface directly with the individual; and a power supply.

CN 111179945 provides a voiceprint-recognition-based safety door control method and device. The method comprises the steps: collecting voice information of a user after the user inputs an opening password, and extracting the voiceprint features in the voice information; processing the voiceprint features by using a risk prediction network to obtain an estimated risk level of the voiceprint features; under the condition that the estimated risk level of the voiceprint features is a low risk and the opening password input by the user passes password verification, controlling a safety door of a bank vault to be opened; and under the condition that the estimated risk level of the voiceprint feature is a high risk, controlling the safety door of the bank vault to be closed. According to the scheme, the voiceprint characteristics when the user inputs the vault password are processed by using the pre-constructed risk prediction network, the risk level of the scene that the user inputs the vault password is predicted, and the opening or closing of the vault safety door is controlled based on the prediction result, so that the property loss caused by opening of the vault door in a high-risk scene is effectively avoided.

It would in view of what has heen described above be of interest to use a more objective and automated way of determining the emotional state and also to provide an automatic way of acting on a determined emotional state.

### SUMMARY OF THE INVENTION

The present invention is therefore directed towards providing an objective way of determining the emotional state of a user capable of being used in various ways and in different situations.

This object is according to a first aspect achieved through a method of assessing the emotional state of a user, the method as claimed by claim 1.

This object is according to a second aspect achieved through an arrangement as claimed by claim 8.

The dependent claims define preferable implementations.

The present invention has many advantages. It provides an objective determination of the emotional state of a user, which may be used in a number of practical situations, such as giving the user feedback about the emotional state, sending an alarm message and/or controlling access to an area.

It should be emphasized that the term "comprises/comprising" when used in this specification is taken to specify the presence of stated features, integers, steps or components, but does not preclude the presence or addition of one or more other features, integers, steps, components or groups thereof.

### BRIEF DESCRIPTION OF THE DRAWINGS

The present invention will now be described in more detail in relation to the enclosed drawings, in which:
fig. 1 schematically shows an arrangement for assessing the emotional state of a user comprising an emotional state determining device, a user interface, a body sensor, a user feedback device, an alarm message transmitter, an access control device and a database,
fig. 2 schematically shows one way of realizing the emotional state determining device,
fig. 3 schematically shows a text data set together with a voice data set, a body data set and a number of emotional state classifications,
fig. 4 shows a flow chart of a number of method steps in a method of assessing the emotional state of a user, and
fig. 5 schematically shows a computer program product in the form of a CD Rom disc comprising computer program code for implementing the emotional state determining device.

### DETAILED DESCRIPTION OF EMBODIMENTS

In the following description, for purposes of explanation and not limitation, specific details are set forth such as particular architectures, interfaces, techniques, etc. in order to provide a thorough understanding of embodiments described herein. However, it will be apparent to those skilled in the art that the present invention may be practiced in other embodiments that depart from these specific details. In other instances, detailed descriptions of well-known devices, circuits, and methods are omitted so as not to obscure the description with unnecessary detail.

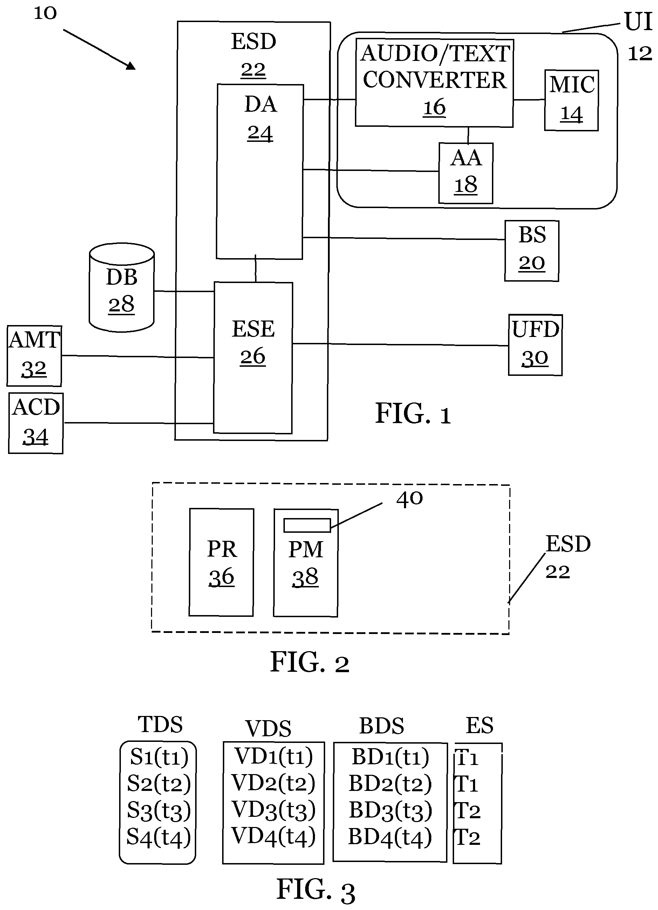

Fig. 1 schematically shows an arrangement 10 for assessing the emotional state of a user. The arrangement 10 comprises a user interface UI 12 that is connected to an emotional state determining device 22. To the emotional state determining device 22 there is also connected a body sensor BS 20, a database DB 28, a user feedback device UFD 30, an alarm message transmitter AMT 32 and an access control device ACD 34. The body sensor 20 may as an example be a pulse sensor, a blood pressure sensor or a pulse oximeter. It may also comprise a camera for instance a camera focusing on a pupil in the eye of the user. As another alternative it may be an Electroencephalography (EEG) scanner. The body sensor is provided for sensing body data in the form of at least one physical quantity from the body of the user, which data comprises physical quantities of the body such as heart rate (pulse), oxygen content in blood, blood pressure, pupil size, voltage fluctuations in the brain (EEG) and respiratory rate. In some instances, the body sensor 18 may be combined with the user feedback device 30. In this case they may be provided in a garment, like a vest carried by the user. As an alternative they may be combined in a helmet such as virtual reality (VR) helmet.

It should here be realized that the body sensor 20 is optional as are also the alarm message transmitter 32, the access control device 34 and the user feedback device 28 and even the user interface 12. When being provided each of these devices may additionally be external to the arrangement.

The emotional state determining device 22 in turn comprises a data analyzer DA 22 and an emotional state estimator ESE 26.

In the example in fig. 1 the user interface 12 comprises a microphone MIC 14 connected to an audio/text converter 16 and an audio analyzer AA 18 also connected to the audio/text converter 16. The microphone 14 records audio from a user and supplies it to the converter 16 which in turn converts the audio to a data set comprising text and supplies the data set to the data analyzer 24 of the emotional state determining device 22. The audio analyzer 18 in turn analyzes the audio in order to detect physical quantities such as frequencies and sound pressures in the audio. From this it extracts properties of the voice such a pitch and volume. These extracted properties of the voice are supplied to the data analyzer 24 as voice data.

The shown user interface realization is also merely one realization. The user interface 12 may as an alternative comprise a keyboard via which the user may be able to input text. The user interface 12 may be an integral part of the emotional state determining device 22. As an alternative it may be a device that communicates with the emotional state determining device 22, such as a wireless terminal like a smartphone. In this case it is additionally possible that the user interface is also external to the arrangement 10. It should in this case also be realized that the audio analyzer 18 may instead be a part of the emotional state determining device 22.

Fig. 2 shows a block schematic of the structure of one realization of the emotional state determining device 22. The device comprises a processor 36 and a program memory 38 comprising computer program code 40 that implements the functionality of the emotional state determining device 20. The computer program code thus implements the data analyzer and the emotional state estimator and optionally also the audio analyzer 18.

Fig. 3 schematically shows a text data set TDS comprising a number of text strings S1, S2, S3 and S4, where each string is associated with a corresponding point in time t1, t2, t3 and t4 at which the user provided it. With the text data set TDS there is also associated a voice data set VDS comprising voice data and a body data set BDS comprising body data. Body data is data obtained from or caused by the body of the user, such as data obtained through measurements made on the body, while voice data can be considered as being measurements of influences of the body on its environment such as influences on the air, like frequency and pressure variations in the air caused by the lungs, mouth, vocal chords and diaphragm of the body. The voice data set VDS may as an example comprise data of the pitch of a voice air and the body data set may comprise data about heart rate or pulse. There is here likewise a first value VD1 of the voice data, a second value VD2 of voice data, a third value VD3 of voice data as well as a fourth value VD4 of voice data in the voice data set VDS. In a similar manner there is a first value BD1 of body data, a second value BD2 of body data, a third value BD3 of body data as well as a fourth value BD4 of body data in the body data set BDS. Each of the text strings and data values may be associated with a point time at which the symbols of the string were spoken by the user and at which the body and voice data was generated. There may therefore be a correlation between a text string, a voice data value and a body data value in that they may be associated with the same point in time. The first text string S1 and the first values VD1 and BD1 of the voice and body data are thus associated with a first point in time t1, the second text string S2 and the second values VD2 and BD2 of the voice and body data are associated with a second point in time t2, the third text string S3 and the third values VD3 and BD3 of the voice and body data are associated with a third point in time t3 and the fourth text string S4 and the fourth values VD4 and BD4 of the voice and body data are associated with a fourth point in time t4. It should here be realized that more body data types may be included in the body data set and that more voice data types may be included in the voice data set. It is for instance possible with blood pressure data in addition to pulse data and volume data in addition to pitch data.

There are also emotional states ES that have been determined for the different text strings S1, S2, S3 and S4 of the text data set TDS and the associated voice and body data of the voice data set VDS and the body data set BDS, which emotional state has determined based on the body data and/or a classification for a person from which the text, voice data and body data emanates. As an example an emotional state of a first type T1 has been assigned to the first and second body data values BD1 and BD2, which may be a state such as anger or anxiety, while an emotional state of a second type T2 has been assigned to the third and the fourth body data values BD3 and BD4 , which may be a calm or content state.

It should be realized that it is also possible that the body data as well as the voice data is not associated with the text strings, but may instead be a value associated with the text data set as such or a session of the user with the emotional state determining device in which session the text data set is created. In this case the emotional state is a state assigned to the body data set and thereby also to the text data set. As such, the body data may comprise an average, a maximum and/or a minimum value and the voice data may comprise an average, a maximum and/or a minimum value. The processing of the body data and/or voice data may additionally comprise determining if values of the body data and/or voice data are above or below a corresponding threshold. It is additionally possible that further data is provided in relation to the body data and/or voice data such as how many times or how long the body data is above or below the threshold.

The invention is concerned with determining the emotional state of a user, which may be of interest in a wide range of areas.

In order to make such a determination machine learning is employed, which machine learning may be based on text data sets and associated voice data sets and body data sets that are stored in the database 28. Each text data set has been obtained from one or more person, such as the user, together with body data, such as pulse, and voice data, such as pitch, of the same person.

The text data sets, voice data sets and body data sets in the database 28 are part of a trained emotional state model. In this model text data sets are linked to voice data and body data, where the body data has been classified to correspond to an emotional state, such as shown in fig. 3. The data base may thereby comprise a number of linked text data sets, voice data sets and body data sets. In both cases there is an emotional state classification linked to the body data, where the body data is in the form of body data measurements of at least one physical quantity from human bodies. If the body data set comprise pulse data at a certain pulse level and/or blood pressure at a certain blood pressure level and/or respiratory data at a certain respiratory level, then a certain emotional state has been set that is relevant for the corresponding text string and the corresponding voice data. It is in this case also possible that a person on which the body data is measured or another person observing this person has classified the emotional state.

As the body data associated with a text string has received an emotional state classification and is linked to voice data and this text string, the data base will comprise a number of text data sets and corresponding voice data sets in which different emotional states have been set for the text strings and the associated voice data based on the classification made for the corresponding body data.

The processing of text data sets for forming text strings may be based on a sentiment analysis model, such as a model employing a deep neural network.

It can in this way be seen that a database is created where text strings and corresponding voice and body data, i.e. voice and body data obtained at the same time as the symbols of the text strings are produced, are associated with different emotional states, such as calm, agitation, anger, nervousness, happiness and content.

It can thereby be seen that through analysis of a data set that may represent strings of words or symbols spoken by a user together with voice data and body data of the user as the words were spoken, it is possible to link the strings with the associated voice data to an emotional state that has been classified through the body data.

Through comparing new un-classified text data and new voice data obtained in real-time with the text and voice data liked to the classified body data in the trained database it is then possible to classify the text strings of these new data sets and associated voice data and determine the emotional state of a user in real-time.

Knowledge of the emotional state can then be used in a number of ways.

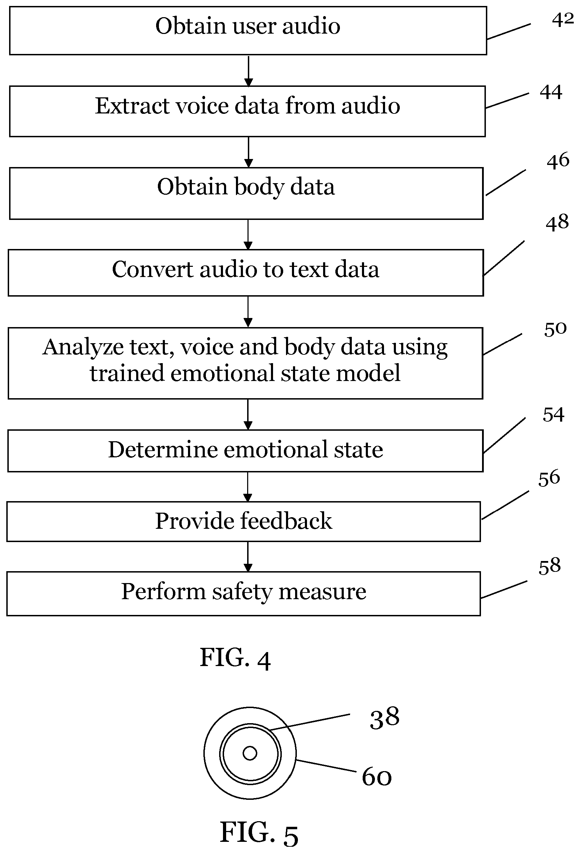

A first use will now be discussed with reference being made to fig. 4, which shows a flow chart of a number of method steps in a method of assessing the emotional state of a user.

The method starts with the obtaining of user audio from the user, step 42, which may be done through the microphone 14 recording audio of the user. The audio analyzer 18 may then also extract voice data from the obtained audio, step 44. Thereby the audio analyzer 18 obtains voice data emanating from the user. The audio analyzer may more particularly detect properties of the recorded audio such as frequencies and/or sound pressures in the verbal input of the user. The audio analyzer 18 may also process the detected properties in order to determine pitch and/or volume in the audio based on the sensed frequency and sound pressure. The voice data is then forwarded to the data analyzer 24. The measurements may also be time stamped in order to enable an assessment of their correlation to the used text strings. In case the user carries a body sensor, this body sensor 20 may additionally obtain or sense body data such as for instance pulse, blood pressure and/or respiratory data in parallel with this obtaining and processing of audio, step 46. Also, this data may be time stamped and supplied to the data analyzer 24. It can in this way be seen that the data analyzer obtains voice data of influences on the environment of the user caused by the body, such as caused by the lungs, vocal chords, diaphragm and mouth in the air surrounding the user, and optionally also body data in the form of at least one physical quantity measured from the body of the user. As an alternative it is possible that the audio analyzer 18 is a part of emotional state determining device 22.

The audio text converter 16 also converts the audio received from the user to text, step 48, and supplies the text as a data set to the data analyzer 24. It can in this way be seen that the data analyzer 24 obtains a data set of text emanating from the user and where text data comprises symbols of the user, like words, produced at the same time as the voice data.

The data analyzer 24 then analyzes the text and voice data and optionally also the body data using the trained emotional state model, step 50, which model has been trained using voice data, text data and body data, which body data is in the form of body data measurements of at least one physical quantity from human bodies and classified according to different emotional states.

If also body data are measured by the body sensor then the analysis may also involve an analysis of this body data. The analysis may comprise an analysis with regard to the occurrence and symbols in the text strings combined with voice data analysis and optionally also of body data analysis. The data analyzer 18 may more particularly analyze voice data such as pitch and volume, for instance in relation to the text strings as well as the body data if present, such as the pulse in relation to the text strings. The emotional state estimator 26 then determines that the strings of the text data set and corresponding voice data and body data correspond to a certain emotional state based on how well they correspond to the text strings with corresponding voice and body data for which different emotional state classifications exist.

An emotional state corresponding to the degree of matching is then determined, step 54. The emotional state is thus determined based on the analysis of the text strings and the obtained voice data and optionally also of the obtained body data. It can thereby be seen that the emotional state is determined based on the comparison with the trained system in the database 28 and the text strings of the text data set and associated voice data and body data of the voice data set and body data set are given an emotional state type of matching text strings with associated voice data and body data. The data sets and classifications may also be added to the data base for use in the training of the system and for identifying emotional states in later obtained data set combinations.

After the emotional state has been determined it is then possible to perform a number of activities. The user may receive feedback on his or her emotional state, which may be done through using the user feedback device 30. The user feedback device 30 may thus be used to provide feedback to the user on his or her emotional state, step 56. As was mentioned above the user interface 12 and the user feedback device 30 may be combined in a VR helmet. The VR helmet may then be used both for receiving the user audio as well as provide the feedback in a virtual reality system. The feedback may in this case be given using an avatar. The feedback may thus comprise audio-visual feedback using an avatar in a virtual reality model to which the user has access. The feedback may be feedback reinforcing or retaining the emotional state or feedback set to change the emotional state. An agitated user may for instance receive feedback having a calming effect. As an alternative the user may carry a garment such as vest, which may be equipped with sensors and elements used to influence the body of the user. Through this vest it is possible to provide feedback influencing the body of the user. It is for instance possible that the feedback comprises temperature and/or pressure feedback to a part of the body. Different areas of the body of the user may thus be influenced, such as through applied pressure, warmth and/or even electrical shock. Also in this case it is possible that the feedback is given in order to reinforce, retain or change the emotional state.

It is additionally or instead possible that a safety measure is performed based on the determined emotional state, step 58, which is typically done using a safety measure performing device, such as the alarm message transmitter 32 or the access control device 34.

The emotional state estimator 26 may as an example transfer the emotional state to the alarm message transmitter 32, which may in turn transmit information of the determined state as an alarm to an alarm handling entity, such as an alarm handling centre. The user may as an example be a first responder, like a policeman or a firefighter. If the analysis reveals that the emotional state is distress, this can trigger the sending of an alarm to a colleague or the alarm handling centre.

As an alternative an emotional state may be sent to the access control device 34. The access control device 34 may control access to an area that the user may want to enter and the access control device 34 may then grant or deny access based on the emotional state. The access control device 34 may as an example actuate a passage mechanism, such as a lock, to an area to which the user desires access. In this way the access control device may lock or open a door based on the emotional state. An angry or distressed user may then be denied access, while a calm user may be granted access.

There are several ways in which the invention may be varied. As was mentioned above it is possible with only a user interface and no body sensor for obtaining inputs from a user. In this case the user interface would need to have an audio to text converter and an audio analyzer for converting audio to text and extracting body data form the audio. It should however be realized that the microphone could be omitted and that the audio instead is received from another source such as via a VOIP connection with the user.

It is also possible that user interface lacks an audio analyzer, for instance if only being provided in the form of a keyboard.

Also the user interface may be omitted, in which case the emotional state determining device may receive audio or text of the user via a communication session with a communication terminal of the user, like a computer or a smartphone. In case the emotional state determining device receives audio from the user, it also comprises the audio/text converter. As was mentioned earlier, it is additionally possible to omit the user feedback device, the alarm message transmitter and the access control device.

The device 20 may, as was mentioned above, be implemented using software in a computer. This software may furthermore be provided in the form of a computer program product, for instance as a data carrier carrying computer program code for implementing the units of the emotional state estimating device 20 when being loaded into a computer and run by that computer. One such data carrier 60 with the computer program code 38, in the form of a CD ROM disc is generally outlined in fig. 5. A CD ROM disc is only one example of a data carrier. It is feasible with other data carriers, like memory sticks as well as hard disks.

The present invention is only to be limited by the following claims.

## Claims

1. A method of assessing the emotional state of a user, the method comprising:
obtaining (42) audio from the user,
obtaining voice data emanating from the user comprising extracting (44) the voice data from the audio,
obtaining text data comprising words of the user produced at the same time as the voice data, the obtaining of text data comprising converting (48) the audio into text data,
analysing (50) the text and voice data using a trained emotional state model, which model has been trained using voice data and text data, determining (54) the emotional state of the user based on the analysis of the text and voice data,
providing feedback (56) to the user of the determined emotional state, and
obtaining (46) body data in parallel with obtaining and processing of audio,
**characterized by**:
performing (58) a safety measure based on the determined emotional state comprising actuating a passage mechanism to an area to which the user desires access, where a calm user is granted access,
wherein
the model has been trained also using body data, which body data is in the form of body data measurements of at least one physical quantity from human bodies and classified according to different emotional states,
the analysing comprises analysing the obtained body data, the determining of the emotional state is based also on the analysed body data, and
the feedback influences the body of the user, for instance through temperature and/or pressure feedback to a part of the body, and is set to change the emotional state of the user with a calming effect.

2. The method according to claim 1, wherein the obtaining of audio comprises recording the audio of the user.

3. The method according to claim 1 or 2, wherein a physical quantity of the body is one or more of heart rate, oxygen content in blood, blood pressure, pupil size, voltage fluctuations in the brain and respiratory rate.

4. The method according to any previous claim, wherein the voice data comprises data of influences on the environments of users caused by their bodies, such as data of influences caused by the lungs and vocal chords and possibly the diaphragms and/or mouths of bodies on the air surrounding such bodies.

5. The method according to any previous claim, wherein the voice data comprises the pitch of a voice obtained from the frequency in verbal input and/or the volume of a voice obtained from sound pressure levels in the air.

6. The method according to any previous claim, wherein the obtained body data comprises pulse, blood pressure and/or respiratory data.

7. The method according to any previous claim, wherein the performing of the safety measure comprises transmitting information of the determined state as an alarm to an alarm handling entity.

8. An arrangement (10) for assessing the emotional state of a user, the arrangement comprising:
an audio to text converter (16) configured to convert audio received from the user to text,
an audio analyzer (18) configured to extract voice data from the obtained audio,
a body sensor (20),
an emotional state determining device (22) comprising a processor (36) being configured to:
obtain said voice data emanating from the user,
obtain said text data comprising words of the user produced at the same time as the voice data,
analyse the text and voice data using a trained emotional state model, which model has been trained using voice data and text data, and
determine the emotional state of the user based on the analysis of the text and voice data, and
a user feedback device (30) configured to provide feedback to the user of the determined emotional state,
**characterized by**
a device (32; 34) performing a safety measure based on the determined emotional state comprising actuating a passage mechanism to an area to which the user desires access, where a calm user is granted access,
wherein
the model has been trained also using body data, which body data is in the form of body data measurements of at least one physical quantity from human bodies and classified according to different emotional states,
the body sensor (20) is configured to obtain body data in parallel with the obtaining and processing of audio,
the analysing comprises analysing the obtained body data, the determining of the emotional state is based also on the analysed body data, and
the feedback influences the body of the user, for instance through temperature and/or pressure feedback to a part of the body, and is set to change the emotional state of the user with a calming effect.

9. The arrangement (10) according to claim 8, further comprising a user interface (12) comprising a microphone (14) for recording the audio of the user, which user interface also comprises the audio to text converter (16) and the audio analyzer (18).

10. The arrangement (10) according to claim 8 or 9, wherein the obtained body data comprises pulse, blood pressure and/or respiratory data.

## Patentansprüche

1. Verfahren zum Beurteilen des emotionales Zustandes eines Benutzers, wobei das Verfahren Folgendes umfasst:
Gewinnen (42) eines Tons von dem Benutzer,
Gewinnen von Sprachdaten, die von dem Benutzer stammen, umfassend das Extrahieren (44) der Sprachdaten aus dem Ton,
Gewinnen von Textdaten, die Worte des Benutzers umfassen, die zur selben Zeit wie die Sprachdaten erzeugt werden, wobei das Gewinnen von Textdaten das Umwandeln (48) des Tons in Textdaten umfasst,
Analysieren (50) der Text- und der Sprachdaten unter Verwendung eines trainierten Modells des emotionalen Zustandes, wobei das Modell unter Verwendung von Sprachdaten und Textdaten trainiert worden ist,
Ermitteln (54) des emotionalen Zustandes des Benutzers auf Grundlage der Analyse der Text- und der Sprachdaten,
Bereitstellen einer Rückmeldung (56) an den Benutzer über den ermittelten emotionalen Zustand und
Gewinnen (46) von Körperdaten parallel zu dem Gewinnen und dem Verarbeiten des Tons,
**gekennzeichnet durch**:
Durchführen (58) einer Sicherheitsmaßnahme auf Grundlage des ermittelten emotionalen Zustandes, umfassend das Betätigen eines Durchgangsmechanismus zu einem Bereich, zu dem der Benutzer einen Zugang wünscht, wobei einem ruhigen Benutzer der Zugang gewährt wird, wobei
das Modell ebenfalls unter Verwendung von Körperdaten trainiert worden ist, wobei die Körperdaten in der Form von Körperdatenmessungen mindestens einer physikalischen Größe von menschlichen Körpern vorliegen und entsprechend unterschiedlichen emotionalen Zuständen klassifiziert sind,
das Analysieren das Analysieren der gewonnenen Körperdaten umfasst,
das Ermitteln des emotionalen Zustandes ebenfalls auf den analysierten Körperdaten beruht und
die Rückmeldung den Körper des Benutzers, zum Beispiel durch eine Temperatur- und/oder Druckrückmeldung an einen Teil des Körpers, beeinflusst und dazu eingerichtet ist, den emotionalen Zustand des Benutzers mit einer beruhigenden Wirkung zu verändern.

2. Verfahren nach Anspruch 1, wobei das Gewinnen eines Tons das Aufzeichnen des Tons des Benutzers umfasst.

3. Verfahren nach Anspruch 1 oder 2, wobei eine physikalische Größe des Körpers eines oder mehreres von Herzfrequenz, Sauerstoffgehalt im Blut, Blutdruck, Pupillengröße, Spannungsschwankungen im Gehirn und Atemfrequenz ist.

4. Verfahren nach einem der vorhergehenden Ansprüche, wobei die Sprachdaten Daten von Einflüssen auf die Umgebungen von Benutzern umfassen, die durch deren Körper verursacht werden, wie beispielsweise Daten von Einflüssen, die durch die Lungen und die Stimmbänder und möglicherweise die Zwerchfelle und/oder die Münder von Körpern auf die Luft, die solche Körper umgibt, verursacht werden.

5. Verfahren nach einem der vorhergehenden Ansprüche, wobei die Sprachdaten die Tonhöhe einer Stimme, die aus der Frequenz bei mündlicher Eingabe gewonnen wird, und/oder die Lautstärke einer Stimme, die aus Schalldruckpegeln in der Luft gewonnen wird, umfassen.

6. Verfahren nach einem der vorhergehenden Ansprüche, wobei die gewonnenen Körperdaten Puls-, Blutdruck- und/oder Atmungsdaten umfassen.

7. Verfahren nach einem der vorhergehenden Ansprüche, wobei das Durchführen der Sicherheitsmaßnahme das Übermitteln von Informationen über den ermittelten Zustand als ein Alarm an eine Alarmbehandlungsinstanz umfasst.

8. Anordnung (10) zum Beurteilen des emotionales Zustandes eines Benutzers, wobei die Anordnung Folgendes umfasst:
einen Ton-zu-Text-Wandler (16), der dafür konfiguriert ist, von dem Benutzer empfangenen Ton zu Text umzuwandeln,
einen Tonanalysator (18), der dafür konfiguriert ist, Sprachdaten aus dem gewonnenen Ton zu extrahieren,
einen Körpersensor (20),
eine Ermittlungsvorrichtung (22) für den emotionalen Zustand, die einen Prozessor (36) umfasst, der zu Folgendem konfiguriert ist:
die Sprachdaten zu gewinnen, die von dem Benutzer stammen,
die Textdaten zu gewinnen, die Worte des Benutzers umfassen, die zur selben Zeit wie die Sprachdaten erzeugt werden,
die Text- und die Sprachdaten unter Verwendung eines trainierten Modells des emotionalen Zustandes zu analysieren, wobei das Modell unter Verwendung von Sprachdaten und Textdaten trainiert worden ist, und
den emotionalen Zustand des Benutzers auf Grundlage der Analyse der Text- und der Sprachdaten zu ermitteln, und
eine Benutzerrückmeldungseinrichtung (30), die dafür konfiguriert ist, eine Rückmeldung an den Benutzer über den ermittelten emotionalen Zustand bereitzustellen,
**gekennzeichnet durch**:
eine Einrichtung (32; 34), die eine Sicherheitsmaßnahme auf Grundlage des ermittelten emotionalen Zustandes durchführt, umfassend das Betätigen eines Durchgangsmechanismus zu einem Bereich, zu dem der Benutzer einen Zugang wünscht, wobei einem ruhigen Benutzer der Zugang gewährt wird, wobei
das Modell ebenfalls unter Verwendung von Körperdaten trainiert worden ist, wobei die Körperdaten in der Form von Körperdatenmessungen mindestens einer physikalischen Größe von menschlichen Körpern vorliegen und entsprechend unterschiedlichen emotionalen Zuständen klassifiziert sind,
der Körpersensor (20) dafür konfiguriert ist, parallel zu dem Gewinnen und dem Verarbeiten des Tons Körperdaten zu gewinnen,
das Analysieren das Analysieren der gewonnenen Körperdaten umfasst,
das Ermitteln des emotionalen Zustandes ebenfalls auf den analysierten Körperdaten beruht und
die Rückmeldung den Körper des Benutzers, zum Beispiel durch eine Temperatur- und/oder Druckrückmeldung an einen Teil des Körpers, beeinflusst und dazu eingerichtet ist, den emotionalen Zustand des Benutzers mit einer beruhigenden Wirkung zu verändern.

9. Anordnung (10) nach Anspruch 8, die ferner eine Benutzerschnittstelle (12) umfasst, die ein Mikrofon (14) zum Aufzeichnen des Tons des Benutzers umfasst, wobei die Benutzerschnittstelle ebenfalls den Ton-zu-Text-Wandler (16) und den Tonanalysator (18) umfasst.

10. Anordnung (10) nach Anspruch 8 oder 9, wobei die gewonnenen Körperdaten Puls-, Blutdruck- und/oder Atmungsdaten umfassen.

## Revendications

1. Procédé d'évaluation de l'état émotionnel d'un utilisateur, le procédé comprenant :
l'obtention (42) de données audio de l'utilisateur,
l'obtention de données vocales émanant de l'utilisateur comprenant l'extraction (44) des données vocales des données audio,
l'obtention de données textuelles comprenant des mots de l'utilisateur produits en même temps que les données vocales, l'obtention de données textuelles comprenant la conversion (48) des données audio en données textuelles,
l'analyse (50) des données textuelles et vocales à l'aide d'un modèle d'état émotionnel entraîné, lequel modèle a été entraîné à l'aide de données vocales et de données textuelles,
la détermination (54) de l'état émotionnel de l'utilisateur en fonction de l'analyse des données textuelles et vocales,
la fourniture à l'utilisateur d'une rétroaction (56) de l'état émotionnel déterminé, et
l'obtention (46) de données corporelles parallèlement à l'obtention et au traitement de données audio,
**caractérisé par** :
la réalisation (58) d'une mesure de sécurité basée sur l'état émotionnel déterminé comprenant l'actionnement d'un mécanisme de passage vers une zone à laquelle l'utilisateur souhaite accéder où un utilisateur calme se voit accorder l'accès,
le modèle ayant également été entraîné à l'aide de données corporelles, lesquelles données corporelles sont sous la forme de mesures de données corporelles d'au moins une grandeur physique de corps humains et sont classées selon différents états émotionnels,
l'analyse comprenant l'analyse des données corporelles obtenues,
la détermination de l'état émotionnel étant également basée sur les données corporelles analysées, et
la rétroaction influençant le corps de l'utilisateur, par exemple par rétroaction de température et/ou de pression sur une partie du corps, et étant définie sur pour modifier l'état émotionnel de l'utilisateur avec un effet calmant.

2. Procédé selon la revendication 1, dans lequel l'obtention de données audio comprend l'enregistrement des données audio de l'utilisateur.

3. Procédé selon la revendication 1 ou 2, dans lequel une grandeur physique du corps est une ou plusieurs des grandeurs suivantes : fréquence cardiaque, teneur en oxygène dans le sang, tension artérielle, taille des pupilles, fluctuations de tension dans le cerveau et fréquence respiratoire.

4. Procédé selon l'une quelconque des revendications précédentes, dans lequel les données vocales comprennent des données d'influences sur l'environnement des utilisateurs provoquées par leur corps, telles que des données d'influences provoquées par les poumons et les cordes vocales et éventuellement les diaphragmes et/ou les bouches des corps sur l'air entourant ces corps.

5. Procédé selon l'une quelconque des revendications précédentes, dans lequel les données vocales comprennent le registre d'une voix obtenu à partir de la fréquence en entrée verbale et/ou le volume d'une voix obtenu à partir des niveaux de pression sonore dans l'air.

6. Procédé selon l'une quelconque des revendications précédentes, dans lequel les données corporelles obtenues comprennent des données de pouls, de tension artérielle et/ou de respiration.

7. Procédé selon l'une quelconque des revendications précédentes, dans lequel l'exécution de la mesure de sécurité comprend la transmission d'informations de l'état déterminé sous forme d'alarme à une entité de traitement d'alarme.

8. Dispositif (10) permettant d'évaluer l'état émotionnel d'un utilisateur, ledit dispositif comprenant :
un convertisseur audio-texte (16) configuré pour convertir les données audio reçues de l'utilisateur en texte,
un analyseur audio (18) configuré pour extraire des données vocales des données audio obtenues,
un capteur corporel (20),
un dispositif de détermination d'état émotionnel (22) comprenant un processeur (36) configuré pour :
obtenir lesdites données vocales émanant de l'utilisateur,
obtenir lesdites données textuelles comprenant des mots de l'utilisateur produits en même temps que les données vocales,
analyser les données textuelles et vocales à l'aide d'un modèle d'état émotionnel entraîné, lequel modèle a été entraîné à l'aide de données vocales et de données textuelles, et
déterminer l'état émotionnel de l'utilisateur en fonction de l'analyse des données textuelles et vocales, et
un dispositif de rétroaction vers l'utilisateur (30) configuré pour fournir une rétroaction à l'utilisateur de l'état émotionnel déterminé,
**caractérisé par**
un dispositif (32 ; 34) réalisant une mesure de sécurité basée sur l'état émotionnel déterminé comprenant l'actionnement d'un mécanisme de passage vers une zone à laquelle l'utilisateur souhaite accéder où un utilisateur calme peut accéder,
le modèle ayant également été entraîné à l'aide de données corporelles, lesquelles données corporelles sont sous la forme de mesures de données corporelles d'au moins une grandeur physique de corps humains et sont classées selon différents états émotionnels,
le capteur corporel (20) étant configuré pour obtenir des données corporelles parallèlement à l'obtention et au traitement de données audio,
l'analyse comprenant l'analyse des données corporelles obtenues,
la détermination de l'état émotionnel étant également basée sur les données corporelles analysées, et
la rétroaction influençant le corps de l'utilisateur, par exemple par rétroaction de température et/ou de pression sur une partie du corps, et étant définie pour modifier l'état émotionnel de l'utilisateur avec un effet calmant.

9. Dispositif (10) selon la revendication 8, comprenant en outre une interface d'utilisateur (12) comprenant un micro (14) pour enregistrer les données audio de l'utilisateur, laquelle interface d'utilisateur comprend également le convertisseur données audio-texte (16) et l'analyseur audio (18).

10. Dispositif (10) selon la revendication 8 ou 9, dans lequel les données corporelles obtenues comprennent des données de pouls, de tension artérielle et/ou de respiration.
